# EUROPEAN PATENT SPECIFICATION

(11) **EP 0 832 784 B1**
(45) Date of publication and mention of the grant of the patent: **10.01.2001**
(21) Application number: 97202686.8
(22) Date of filing: 02.09.1997
(51) Int. Cl.: B60P 7/08, B62B 3/00

(54) **Strap for a container or the like**
Gurt für einen Container oder dergleichen
Sangle pour un conteneur ou similaire

(30) Priority: 27.09.1996 NL 1004129
(43) Date of publication of application: 01.04.1998
(73) Proprietor: Van Egmond Technische Handelsonderneming B.V., 3861 RH Nijkerk (NL); Bibia B.V., 3641 SK Mijdrecht (NL)
(72) Inventor: Versluis, Evert Cornelis Antonie, 3862 WL Nijkerk (NL); Bul, Paul Cornelis, 9300 Aalst (BE); Mooren, Wilhelmus Franciscus Christina, 2624 NC Delft (NL)
(74) Representative: de Vries, Johannes Hendrik Fokke

(56) References cited:
- AT-B- 397 354
- FR-A- 1 492 840
- FR-A- 2 537 949
- FR-A- 2 612 863
- GB-A- 2 008 064

## Description

The invention relates to an elastic restraining strap for a container or the like, said strap comprising an elongated band, whose ends are provided with means for fastening the band to a container, at least one elastic band portion and a non-elastic band portion, whereby said elastic band portion is considerably shorter than said non-elastic band portion.

Elastic straps or quick fasteners of this kind are known to exist in various embodiments thereof (in the present case, the state of the art, which forms the basis for the preamble of claim 1, is defined by FR-A-1 492 840), they are for example used with laundry container trolleys for closing the open side, in order to prevent the clean or dirty linen stacked in the container trolley from falling out of the trolley. Furthermore such straps are for example used with container trolleys for the transportation of packaged foodstuffs, which are used for stocking up shops and the like.

The state-of-the-art elastic restraining straps are improvements over straps which are usually made of rubber, and which are relatively highly elastic over their entire length. When these restraining straps, which are usually provided with a hook at one end, were detached from the container on the hook side and were released while still under tension, the hook was let off, as it were, which constituted a risk of injury to users and by-standers.

The object of the invention is to provide an improved elastic restraining strap of the kind referred to in the introduction.

In order to accomplish that objective the elastic restraining strap according to the invention is characterized in that the band is made in one piece.

In this manner an elastic restraining strap is obtained which on the one hand still possesses sufficient elasticity to fasten a connecting element, such as a hook, to the container and/or detach it therefrom, as well as still comprises a non-elastic portion having such a length that when the strap is released while still under tension, the hook no longer constitutes a danger to users or by-standers, but which on the other hand has a far less complicated structure.

Preferably the elastic band portion is made of elastic rubber, and the non-elastic band portion is made of non-elastic rubber.

In order to render the restraining strap according to the invention suitable for containers of various dimensions in spite of its small degree of extensibility, the band is according to the invention preferred to possess a closed fastening loop at one end, through which the band can be pulled, whereby said fastening loop is closed at its free end by an adjusting bridge, and whereby the band portion joining said fastening loop comprises a length adjusting portion having a number of successive slots extending transversely to the longitudinal direction of the band, which function to receive said adjusting bridge. In this manner it is possible to adjust the length of the strap to the dimensions of the open side of the container.

The invention will be explained in more detail hereafter with reference to the drawing, which shows an embodiment of the restraining strap according to the invention.

Fig. 1 is a perspective view of a container trolley, which is for example used for the transportation of laundry, whereby single elastic restraining straps according to a preferred embodiment of the invention are provided.

Fig. 2 is a front view of one of the restraining straps shown in Fig. 1.

Fig. 3 is a plan view of the restraining strap shown in Fig. 2.

Fig. 4 is a larger-scale perspective view of detail IV of Fig. 1.

Fig. 5 is a larger-scale longitudinal sectional view of the length adjusting part and the fastening loop of the restraining strap shown in Fig. 2.

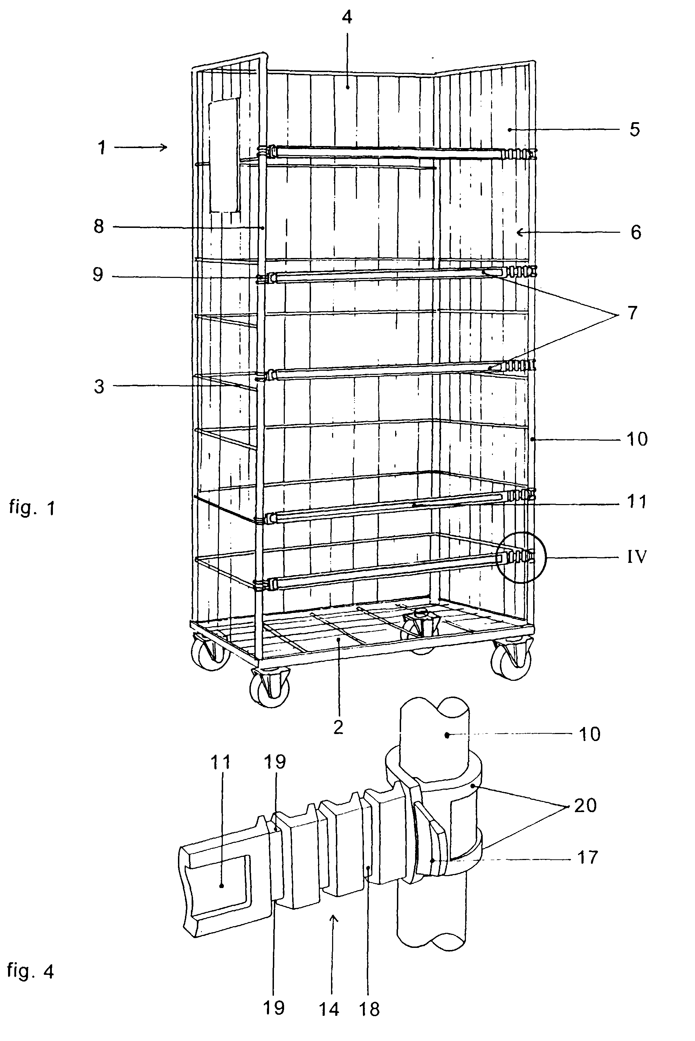

Fig. 1 shows by way of example a laundry container 1 in the shape of a trolley, which comprises a bottom 2, three upright walls 3-5 and an open side 6. Bottom 2 and walls 3-5 are built up of tubes and wire grates. The open side 6 of the laundry container shown in Fig. 1 is closed by five elastic restraining straps 7, also called container straps. Restraining straps 7 are each attached to the upright tube 8 of side wall 5 with one end, and they are coupled, by means of a hook 9, to the upright tube 10 of side wall 3 with the other end. The provision of the elastic restraining straps 7 prevents for example sacks of dirty linen stacked in the laundry container from falling out of the container.

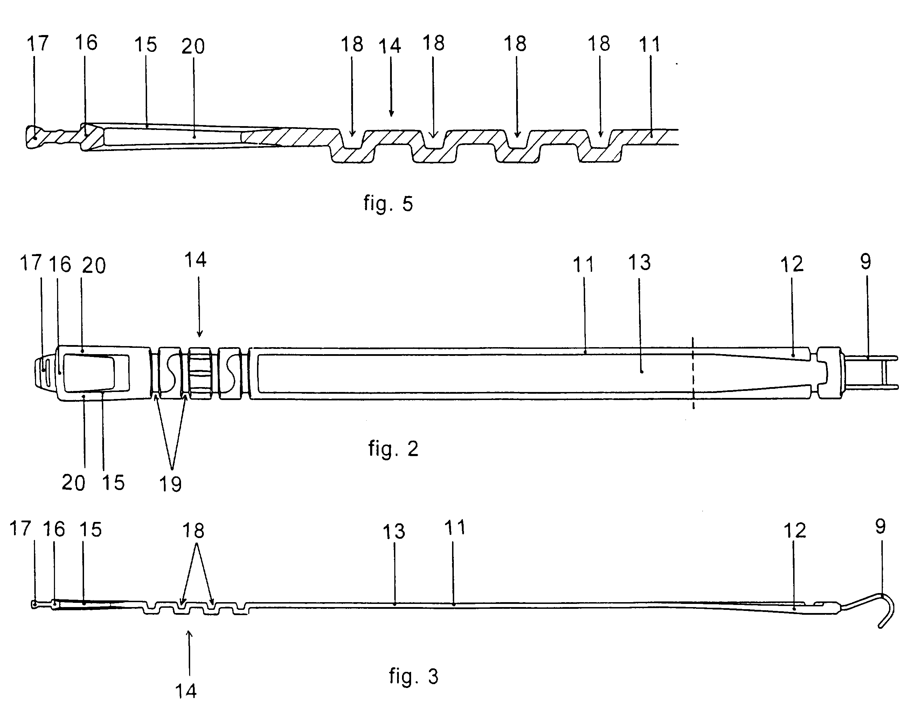

One of the elastic restraining straps 7 is shown in front view and in plan view in Figs. 2 and 3 respectively. Restraining straps 7 each comprise an elongated band 11, to which hook 9 is joined at one end, which hook functions as a fastener. The band portion 12 that joins hook 9 is elastic, whilst the next band portion 13 is non-elastic, whereby band portion 12 is considerably shorter than non-elastic band portion 13. In Fig. 2 the place where band portion 12 merges with band portion 13 is diagrammatically indicated by a dashed line by way of example. If necessary the band may be provided with more than one elastic band portion 12.

Because band 11 is built up of a relatively short elastic band portion 12 and a non-elastic band portion 13, it can be achieved that when hook 9 is detached from tube 10 and said hook is released while still under tension, it is not let off by a catapult, as it were, so that there is no danger for the user or for by-standers. As is apparent from the plan view of Fig. 3, band 11 on the inside part of band portion 12 is thicker than on the other part, as a result of which it is achieved that, insofar as the hook is accelerated upon being released, said acceleration is directed towards the inside of container 1.

The part of the band joining band portion 13 comprises a length adjusting portion 14 and a loop 15, which is closed by an adjusting bridge 16 at its free end. Said adjusting bridge 16 is provided with a pull lip 17, whose function will be discussed hereafter. Band 11 and band portions 12-15 are made in one piece, preferably of rubber.

Hook 9 is placed in the mould during manufacture and incorporated into the rubber by means of a vulcanisation process. Band portion 12 preferably consists of an elastic rubber, whilst band portion 13 preferably consists of non-elastic rubber. The non-elastic property of band portion 13 may also be obtained by incorporating a core of a non-elastic material in said band portion 13, if desired.

As is shown in Fig. 4, band 11 can be placed round tube 8 with fastening loop 15 and be pulled through said fastening loop 15 so as to fasten restraining strap 7 to container 1. In order to be able to adapt the length of restraining strap 7 to containers having varying dimensions, in spite of the limited elasticity of band 11, length adjusting portion 14 has been provided, which comprises four successive slots 18 in the illustrated embodiment, which are capable of receiving adjusting bridge 16. Slots 18 are each made up of a part having an n-shaped longitudinal section, whereby each slot 18 is slightly conical and adjusting bridge 16 is shaped correspondingly, as is apparent from the sectional view of Fig. 5. As a result of this adjusting bridge 16 can be readily pressed into a desired slot and be detached therefrom again. Said detaching is furthermore facilitated by the presence of pull lip 17.

As is apparent from Figs. 2 and 4, a recess 19 is formed in the upper and lower longitudinal edges of band 11 near each slot 18, in which recess the upper and lower connecting bridges 20 of loop 15 can be received.

From the foregoing it will be apparent that the invention provides an elastic restraining strap, whereby the danger that occurs when the hook of the known elastic restraining straps is released has been eliminated by designing the strap with an elastic band portion of a relatively small length. The length of elastic band portion 12 is selected such that, given the elasticity of the material, it is possible to fasten hook 9 to tube 10 and/or remove it therefrom. The adjusting of the length of the restraining strap to the dimensions of the container being used can take place in a simple manner by making the strap in one piece with length adjusting portion 14 and loop 15.

Although the elastic restraining strap according to the invention has hereinabove been explained on the basis of its use with a laundry container, it will be apparent that the elastic restraining strap according to the invention can also be used with other types of containers.

The invention is not limited to the embodiment described in the above, which embodiment can be varied in several ways within the scope of the claims.

## Claims

1. An elastic strap (7) for a container (1) or the like, said strap comprising an elongated band (11), whose ends are provided with means (9, 15) for fastening the band to a container, at least one elastic band portion (12) and a non-elastic band portion (13), whereby said elastic band portion is considerably shorter than said non-elastic band portion, **characterized in that** said band (11) is made in one piece.

2. A restraining strap according to claim 1, wherein said elastic band portion (12) is made of elastic rubber and said non-elastic band portion (13) is made of non-elastic rubber.

3. A restraining strap according to claim 2, wherein said non-elastic band portion (13) comprises a core of a non-elastic material.

4. A restraining strap according to any one of the preceding claims, wherein said band (11) possesses a hook (9) at one end, whereby said elastic band portion (12) joins said end.

5. A restraining strap according to claim 4, wherein said elastic band portion (12) on the operative side of the hook (9) comprises a greater thickness than the other part of the band (11).

6. A restraining strap according to any one of the preceding claims, wherein said band (11) possesses a closed fastening loop (15) at one end, through which the band can be pulled, whereby said fastening loop is closed at its free end by an adjusting bridge (16), and whereby the band portion joining said fastening loop (15) comprises a length adjusting portion (14) having a number of successive slots (18) extending transversely to the longitudinal direction of the band (11), which function to receive said adjusting bridge (16).

7. A restraining strap according to claim 6, wherein said slots (18) are each made up of a part having an n-shaped longitudinal section, which is integral with said band.

8. A restraining strap according to claim 6 or 7, wherein a recess (19) is formed in the upper and lower longitudinal edges of said band (11) near each slot (18), said recess functioning to receive the upper and lower connecting bridges (20) of said loop (15).

9. A restraining strap according to claim 6, 7, or 8, wherein said adjusting bridge (16) is provided with a pull lip (17).

## Patentansprüche

1. Elastischer Gurt (7) für einen Container (1) oder dergleichen, wobei der Gurt ein gestrecktes Band (11) umfasst, dessen Enden mit Vorrichtungen (9, 15) versehen sind, um das Band an einem Container zu befestigen, und das mindestens einen elastischen Bandteil (12) und einen nicht elastischen Bandteil (13) umfasst, wobei der elastische Bandteil beträchtlich kürzer ist als der nicht-elastische Bandteil, dadurch gekennzeichnet, dass das Band (11) aus einem Stück hergestellt ist.

2. Haltegurt nach Anspruch 1, wobei der elastische Bandteil (12) aus einem elastischen Gummi hergestellt ist und der nicht-elastische Bandteil (13) aus einem nicht-elastischen Gummi hergestellt ist.

3. Haltegurt nach Anspruch 2, wobei der nicht-elastische Bandteil (13) einen Kern aus einem nicht-elastischen Material umfasst.

4. Haltegurt nach einem der vorhergehenden Ansprüche, wobei das Band (11) an einem Ende einen Haken (9) aufweist, wodurch der elastische Bandteil (12) mit diesem Ende verbunden wird.

5. Haltegurt nach Anspruch 4, wobei der elastische Bandteil (12) auf der Bedienungsseite des Hakens (9) eine größere Dicke aufweist als der andere Teil des Bandes (11).

6. Haltegurt nach einem der vorhergehenden Ansprüche, wobei das Band (11) an einem Ende eine geschlossene Befestigungsschlaufe (15) aufweist, durch die das Band gezogen werden kann, wodurch die Befestigungsschlaufe an ihrem freien Ende durch eine Justierbrücke (16) geschlossen wird und wodurch der Bandteil, der mit der Befestigungsschlaufe (15) verbunden ist, einen Teil (14) zum Justieren der Länge umfasst, der eine Anzahl aufeinanderfolgender Schlitze (18) aufweist, die sich transversal zur Längsrichtung des Bandes (11) erstrecken, und die dazu dienen, die Justierbrücke (16) aufzunehmen.

7. Haltegurt nach Anspruch 6, wobei die Schlitze (18) jeweils aus einem Teil gemacht sind, der einen n-förmigen Längsabschnitt aufweist, der integraler Bestandteil des Bandes ist.

8. Haltegurt nach Anspruch 6 oder 7, wobei eine Ausnehmung (19) in den oberen und unteren Längskanten des Bandes (11) nahe jeden Spaltes (18) gebildet ist, wobei die Ausnehmung zur Aufnahme der oberen und unteren Verbindungsbrücken (20) der Schlaufe (15) dienen.

9. Haltegurt nach Anspruch 6, 7 oder 8, wobei die Justierbrücke (16) mit einer Lasche (17) versehen ist.

## Revendications

1. Sangle élastique (7) pour conteneur (1) ou analogue, ladite sangle comprenant une bande allongée (11) dont les extrémités sont pourvues de moyens (9, 15) servant à fixer la bande à un conteneur, au moins une partie élastique (12) de bande et une partie non élastique (13) de bande, ladite partie élastique de bande étant considérablement plus courte que ladite partie non élastique de bande, **caractérisée** en ce que ladite bande (11) est d'une seule pièce.

2. Sangle de maintien selon la revendication 1, dans laquelle ladite partie élastique (11) de bande est en caoutchouc élastique et ladite partie non élastique de bande (13) est en caoutchouc non élastique.

3. Sangle de maintien selon la revendication 2, dans laquelle ladite partie non élastique (13) de bande comporte une âme en matière non élastique.

4. Sangle de maintien selon l'une quelconque des revendications précédentes, dans laquelle ladite bande (11) possède à une extrémité un crochet (9) par lequel ladite partie élastique (12) de bande est réunie à ladite extrémité.

5. Sangle de maintien selon la revendication 4, dans laquelle ladite partie élastique (12) de bande présente, du côté utile du crochet (9), une plus grande épaisseur que l'autre partie de la bande (11).

6. Sangle de maintien selon l'une quelconque des revendications précédentes, dans laquelle ladite bande (11) possède à une extrémité une boucle de fixation fermée (15), à travers laquelle peut être tirée la bande, ladite boucle de fixation étant fermée à son extrémité libre par un étrier de réglage (16), et la partie de bande qui relie ladite boucle de fixation (15) comportant une partie (14) de réglage de longueur qui a un certain nombre de gorges successives (18) s'étendant transversalement par rapport à la direction longitudinale de la bande (11) et servant à recevoir ledit étrier de réglage (16).

7. Sangle de maintien selon la revendication 6, dans laquelle lesdites gorges (18) sont constituées chacune par une partie à section longitudinale en forme de n, qui fait corps avec ladite bande.

8. Sangle de maintien selon la revendication 6 ou 7, dans laquelle un évidement (19) est formé dans les bords longitudinaux supérieur et inférieur de ladite bande (11) près de chaque gorge (18), ledit évidement servant à recevoir les étriers de raccordement supérieur et inférieur (20) de ladite boucle (15).

9. Sangle de maintien selon la revendication 6, 7 ou 8, dans laquelle ledit étrier de réglage (16) est pourvu d'un bec de traction (17).
